(19) Europäisches Patentamt

European Patent Office

Office européen des brevets

(11) **EP 1 460 412 A1**

(12) **EUROPEAN PATENT APPLICATION**
published in accordance with Art. 158(3) EPC

(43) Date of publication:
    **22.09.2004 Bulletin 2004/39**

(51) Int Cl.⁷: **G01N 21/27**

(21) Application number: **02792032.1**

(86) International application number:
    **PCT/JP2002/013716**

(22) Date of filing: **26.12.2002**

(87) International publication number:
    **WO 2003/056307 (10.07.2003 Gazette 2003/28)**

(84) Designated Contracting States:
    **AT BE BG CH CY CZ DE DK EE ES FI FR GB GR
    IE IT LI LU MC NL PT SE SI SK TR**
    Designated Extension States:
    **AL LT LV MK RO**

(30) Priority: **26.12.2001 JP 2001395145**

(71) Applicant: **HAMAMATSU PHOTONICS K. K.
    Hamamatsu-shi, Shizuoka 435-8558 (JP)**

(72) Inventors:
    • **MIZUSHIMA, Yoshihiko,
      c/o Hamamatsu Photonics K.K.
      Hamamatsu-shi, Shizuoka 435-8558 (JP)**
    • **MATSUMOTO, Kazuji,
      c/o Hamamatsu Photonics K.K.
      Hamamatsu-shi, Shizuoka 435-8558 (JP)**

(74) Representative: **Frost, Alex John et al
    Boult Wade Tennant,
    Verulam Gardens
    70 Gray's Inn Road
    London WC1X 8BT (GB)**

(54) **OPTICAL ANALYSIS METHOD FOR HETEROGENEOUS MEDIUM**

(57) This optical analysis method comprises a first step of making light having a known intensity $I_0$ at a known wavelength incident on a medium; a second step of measuring an optical intensity upon reflection or optical intensity upon transmission emitted from the medium; a third step of executing the first and second steps at a plurality of wavelengths and recording the optical intensity as a measurement result; and a fourth step of calculating a target physical quantity by a predetermined arithmetic operation utilizing a known physical quantity stored in a database and the optical intensity.

# EP 1 460 412 A1

## Description

### Technical Field

The present invention relates to a method of optically analyzing an inhomogeneous medium.

### Background Art

While natural products, organisms, etc. typify inhomogeneous scattering media, techniques for analyzing such a scattering medium which scatters light while having a nonuniform structure have not been known well. Of course, inhomogeneous media can approximately be analyzed as a uniform subject, though.

According to Japanese Patent Application Laid-Open No. HEI 2-234048, an apparatus has been developed, which irradiates an organism with high-frequency pulse light (on the order of 70 MHz to 200 MHz) having several discrete wavelengths (e.g., 760 nm, etc.), receives the light at a certain distance, determines absorption and scattering coefficients at a measurement wavelength by using a diffusion equation with respective amounts of the attenuation, phase deviation, and modulation of the light, and estimates the amount of hemoglobin from the absorption coefficient.

### Disclosure of the Invention

However, in an actual scattering medium, optical characteristics and refractive indexes may vary among its tissues, thereby causing mutual scattering among the tissues. Namely, biological tissues are not uniform, and cannot be obtainedby simply mixing scatterers and absorbers uniformly. In an organic tissue, its characteristic substances (bloodvessels, muscles, fats, etc.) are distributed in a complicated fashion, so that optical characteristics (e.g., transmittance distribution) of the organism differ from those of its ideal uniform system. However, the conventional method calculates the optical characteristics while assuming the organism to be a uniform system, and thus is hard to measure concentrations of substances in the organism accurately.

More specifically, the conventional theory cannot describe behaviors of light in a medium when optical characteristics vary among individual tissues so that mutual scattering occurs among the tissues. When the refractive index of the medium varies, its light velocity varies as well, whereby an analyzingmethod assuming that light propagates at a fixed speed does not hold. Analyses such as microscopicMonte Carlomethod are not commonly applicable, since they cannot be conducted unless a nonuniform structure distribution is assumed with precision. Therefore, such a conventional method cannot analyze physical properties accurately.

Japanese Patent Application Laid-Open No. HEI 4-297854 discloses a physical quantity analyzing technique using an exponential function, which corrects light-diffusing effects in media. This method uses the exponential function as an absorbance correcting function, whereby effective optical path length increases because of light diffusion even in a uniform medium. Optical intensity attenuates when the effective optical path length increases.

Therefore, the physical quantity analysis of Japanese Patent Application Laid-Open No. HEI 4-297854 empirically introduces an exponential function having a constant with an unclear physical content in order to modify the apparent optical intensity when correcting influences of changes in absorbance.

For overcoming such a problem, it is an object of the present invention to provide a chemical analysis method which can accurately analyze inhomogeneous media.

The inventor of the present application has studied, as a method of chemically analyzing an inhomogeneous medium, an analysis method which expresses behaviors of light in two tissues (x, y) with respect to a light advancing direction when setting up an initial differential equation concerning an inhomogeneous model. Such an analysis method is theorized according to an increase in scattering fed from another channel, while being based on the attenuation of light caused by absorbent substances and scattering substances.

This differential equation and a conventional differential equation (e.g., Kubelka-Munk) basically differ from each other in their setup, so that the absorption and scattering coefficients in a general expression obtained by the foregoing usually differ from those in a theory used in general. It is therefore difficult for such a technique to evaluate results obtained by directly using a general expression in comparison with those obtained by the conventional method.

The method of the present invention conforms to a Kubelka-Munk type analysis method, and is based on an equation with respect to a light advancing direction, two simultaneous equations with respect to an opposite direction, and a general expression solving a differential equation describing the giving and taking of photons between two phases (x, y).

Therefore, when the part of mutual giving and taking of photons between the phases concerning nonuniformity is eliminated, a conventional Amy expression (Kubelka-Munk type general expression) is obtained, whereby the effectiveness of this nonuniformity theory can be proved more easily than the conventional method, and themost common solvingmethod is yielded.

Characteristic features of the present invention lie in that a general expression explaining nonuniformity is determined, and that the general expression can determine an absolute value in a target tissue even when a medium itself has a complicated nonuniform area in which tissues are intertwined.

**Best Modes for Carrying Out the Invention**

In the following, the method of chemically analyzing a inhomogeneous medium in accordance with an embodiment will be explained. Constituents identical to each other will be referred to with numerals or letters identical to each other without repeating their overlapping explanations.

In this method, a solution of simultaneous equations describing a state receiving optical scattering between a plurality of tissues is given in a function form in a method of chemically analyzing an inhomogeneous medium, which makes light incident on the inhomogeneous medium, detects the intensity of light emitted therefrom, inputs thus detected optical intensity into a predetermined function, and determines the physical quantity of the inhomogeneous medium. An undepicted arithmetic unit calculates a specific physical quantity by inputting the detected optical intensity and a known coefficient in a database into the function.

This function is defined by absorption coefficients (a) and scattering coefficients (s) of respective media of the tissues. Though this function also includes a tissue cross-sectional area ratio (K) and a mutual scattering coefficient (F) which are characteristics of nonuniformity, they are not required to have explicitly been known, which is a characteristic feature of this method.

In a specific example in which a medium is composed of two kinds of tissues (X, Y), physical quantities concerning them are distinguishedbysuffixes (x, y). Namely, suffixesxandyindicate that their absorption coefficients a and scattering coefficients s relate to the respective tissues X and Y. The numbers of photons traveling the tissues X and Y are represented by x and y. The light entering direction is defined as Z direction. Since the photons are also converted into an opposite flow by scattering during their progress, those traveling forward and backward are provided with suffixes f and b, respectively. The numbers of photons traveling forward are $x_f$ and $y_f$, whereas the numbers of photons traveling backward are $x_b$ and $y_b$.

Basic equations are given by the following:

Behavior of light concerning the first tissue X:

$$\frac{dx_f}{dz} = -(1-F)(a_x + s_x)x_f + (1-F)s_x x_b + \frac{1}{2}Fs_y y_f + \frac{1}{2}Fs_y y_b$$

$$-\frac{dx_b}{dz} = (1-F)s_x x_f - (1-F)(a_x + s_x)x_b + \frac{1}{2}Fs_y y_f + \frac{1}{2}Fs_y y_b$$

Behavior of light concerning the second tissue Y:

$$\frac{dy_f}{dz} = \frac{1}{2}Fs_x x_f + \frac{1}{2}Fs_x x_b - (1-F)(a_y + s_y)y_f + (1-F)s_y y_b$$

$$-\frac{dy_b}{dz} = \frac{1}{2}Fs_x x_f + \frac{1}{2}Fs_x x_b + (1-F)s_y y_f - (1-F)(a_y + s_y)y_b$$

The coefficient determinant for expressing these differential equations is composed of four rows by four columns. If there are three kinds of tissues, expressions are made in conformity thereto, so as to form a coefficient determinant of six rows by six columns by using three kinds of optical coefficients and three mutual light quantity redistribution coefficients. These expanding methods have been known.

The above expressions are employed when the average radius of curvature r of a tissue interface is greater than the photon mean free path $l$, i.e., when $r > l$. When $r < l$, the above-mentioned $Fs_x$ or $Fs_y$ is simply replaced by F.

When the above-mentioned differential equations are solved, transmittance (T) and reflectance (R) are given by the following expressions:

$$T = 4\frac{\dfrac{K\sigma_x}{1+\sigma_x}\exp(-\lambda_x h)+\dfrac{\sigma_y}{1+\sigma_y}\exp(-\lambda_y h)}{\dfrac{K}{1+\sigma_x}\left[(1+\sigma_x)^2-(1-\sigma_x)^2\exp(-2\lambda_x h)\right]+\dfrac{1}{1+\sigma_y}\left[(1+\sigma_y)^2-(1-\sigma_y)^2\exp(-2\lambda_y h)\right]}$$

$$R = \frac{K(1-\sigma_x)\left[1-\exp(-2\lambda_x h)\right]+(1-\sigma_y)\left[1-\exp(2-\lambda_y h)\right]}{\dfrac{K}{1+\sigma_x}\left[(1+\sigma_x)^2-(1-\sigma_x)^2\exp(-2\lambda_x h)\right]+\dfrac{1}{1+\sigma_y}\left[(1+\sigma_y)^2-(1-\sigma_y)^2\exp(-2\lambda_y h)\right]}$$

where $\lambda_x$, $\lambda_y$, $\rho_x$, $\rho_y$, $\sigma_x$, and $\sigma_y$ are as follows:

Since the depth (h) is longer than the photon mean free path length, the above-mentioned expressions are simplified as follows :

$$T = 4\frac{K\dfrac{\sigma_x}{1+\sigma_x}\exp|-\lambda_x h|+\dfrac{\sigma_y}{1+\sigma_y}\exp|-\lambda_x h|}{K|1+\sigma_x|+|1+\sigma_y|}$$

$$R = \frac{K|1-\sigma_x|+|1-\sigma_y|}{K|1+\sigma_x|+|1+\sigma_y|}$$

$$\lambda = \sqrt{\frac{1-F}{2}\left[(1-F)(\rho_x^2+\rho_y^2)\pm\sqrt{(1-F)^2(\rho_x^2-\rho_y^2)^2+4F^2 s_x s_y(a_x+2s_x)(a_y+2s_y)}\right]}$$

Its two solutions are defined as $\lambda_x$ and $\lambda_y$.

When

$$(\rho_x^2-\rho_y^2)^2 > 4F^2 s_x s_y(a_x+2s_x)(a_y+2s_y),$$

the following expressions are effective by an approximation.

Therefore, the present invention also encompasses the case where the following expressions are used.

$$\lambda_x = \sqrt{(1-F)^2\rho_x^2\pm\frac{F^2 s_x s_y(a_x+2s_x)(a_y+2s_y)}{|\rho_x^2-\rho_y^2|}}$$

$$\rho_x = \sqrt{a_x|a_x+2s_x|}$$

$$\lambda_y = \sqrt{(1-F)^2 \rho_y^2 \pm \frac{F^2 s_x s_y (a_x + 2s_x)(a_y + 2s_y)}{\left|\rho_x^2 - \rho_y^2\right|}}$$

$$\rho_y = \sqrt{a_y \left| a_y + 2s_y \right|}$$

$$\sigma_x = \frac{\lambda_x}{a_x + 2s_x}$$

$$\sigma_y = \frac{\lambda_y}{a_y + 2s_y}$$

As mentioned above, $F^2 s_x s_y$ is simply replaced by $F^2$ when $r < l$ here as well. K is the cross-sectional area ratio of X and Y tissues, whereas F is the mutual scattering light exchange coefficient between tissues (light quantity redistribution coefficient by mutual scattering between X and Y tissues). None of them is required to be given explicitly as a value as will be explained later.

If all of a, s, K, and F for the tissues are known, T and R can be determined. In a measurement analysis, on the other hand, necessary values among a, s, K, and F can be determined if values of T and R are measured. Namely, since reflected light intensity $I_{(R)} = I_0 \times R$ or transmitted light intensity $I_{(T)} = I_0 \times T$ can be measured, each of them becomes an expression with a, s, K, and F alone if incident light intensity $I_0$ at a known wavelength is known. If K and F are known as coefficients, for example, two simultaneous equations including unknowns a and s can be obtained. Unknown coefficients, i.e., target physical quantities, can be calculated if the known coefficients are stored in a database and measured values are put into the above-mentioned functions in the arithmetic unit together with the known coefficients.

In this case, the unknowns can be determined if equations whose number is not smaller than that of the unknowns are set up. While it has conventionally been impossible to calculate concentrations of ingredients from measured results in the case of inhomogeneous media, this method makes it possible to calculate accurate ingredient concentrations for the first time.

F will now be explained. In general, in order for photons scattered within tissues on both sides of an interface therebetween to enter their neighboring tissues beyond the interface, their scattering points must exist within the photon mean free path from the interface. The volume concerned exists within the mean free path from the interface.

As the scattering coefficient is higher, the quantity of light mingling into the neighboring tissue upon scattering increases. On the other hand, the mean free path becomes shorter, whereby the total volume of related generation points decreases. The increase and decrease cancel each other out, so that quantities of light mingling from neighboring tissues are equal to each other and are constant regardless of the scattering coefficient.

This can be proved by mathematical calculations as well.

Though the above relates to a case where the interface between tissues is a plane, a case where the interface between tissues is a curved surface will be considered separately therefrom. Here, it is assumed that one of the tissues has a curved surface such as that of a capillary in an organism, while its average radius of curvature is shorter than the photonmean free path on the contrary to the above.

The light scattered in a blood vessel always exits to an external tissue, so that its related generation volume is the blood vessel volume itself. On the other hand, generation points of photons which are scattered in tissues on the outside of the blood vessel and mingle into the blood vessel only exist on the outer surface of a cylinder surrounding the blood vessel while having a radius therefrom equal to the mean free path.

The product of the related volume and the solid angle by which scattered light diverging therefrom just reaches the inside of the blood vessel becomes an effective volume for exchanging photons. When calculated, this volume can be proved to be substantially equal to the original blood vessel volume.

As explained in the foregoing, the above-mentioned differential equations are based on the inventor's finding that the mutual mingling coefficient of light between inhomogeneous media is simplified and can be considered constant. However, the equations explained in the foregoing relate to a case where the radius of curvature of the interface is shorter than the mean free path. When the radius of curvature of the interface is longer, by contrast, an expression in which $F^2 s_x s_y$ in the above-mentioned equation is simply replaced by another constant $F^2$ is used. It will be sufficient if these equations are selectively used depending on the object.

The tissue cross-sectional area ratio K is originally a geometric constant and can be considered an undetermined constant.

However, there may be a case where the ratio is not constant in the light penetrating direction z in a medium to be measured.

In such a case, the tissue cross-sectional area ratio K is treated as an average constant concerning the depth of the medium. When K changes moderately with respect to the depth, this change can be neglected.

The number of equations can be increased by changing measurement wavelengths. Of course, the wavelength dependence of each of coefficients in each case is required to be known.

The foregoing technique can determine the optical absorption coefficient a, vertical scattering coefficient s, etc.

In general, physical quantities to be determined by a measurement analysis are ingredient concentrations and the like. Here, if two ingredients (p, q) exist in both of the tissues X and Y, the absorption coefficient a and scattering coefficient p are given by the following expressions (*):

(*)

$$a_x = \left( {a_x}\big/{p_x} \right) p_x + \left( {a_x}\big/{q_x} \right) q_x$$

$$s_x = \left( {s_x}\big/{p_x} \right) p_x + \left( {s_x}\big/{q_x} \right) q_x$$

$$a_y = \left( {a_y}\big/{p_y} \right) p_y + \left( {a_y}\big/{q_y} \right) q_y$$

$$s_y = \left( {s_y}\big/{p_y} \right) p_y + \left( {s_y}\big/{q_y} \right) q_y$$

Since a/p, a/q, s/p, s/q, and the like are absorption or scattering coefficients per unit concentration of their corresponding target ingredients (in the medium) and are known in general, p and q can be determined by an algebraic calculation from a and s determined as above.

Since constants can be erased later, the measurement background noise (constant) may be incorporated in addition to the above-mentioned p and q proportional terms when necessary.

These equations are based on the proportional addition rule of the most common concentration media.

In practice, scattering coefficients are likely to change in high concentration media because of multiple scattering or association of scattered particles and the like, so that the proportionality may be lost.

When multiple scattering occurs, the total scattering tends to be saturated. At this time, a proportionality such as that of the following equation, which is weaker than the linear proportionality, is employed, for example. Whichproportionality to employ is determined beforehand by a study depending on the object.

$$S = S_0 p^{1/n} \quad \text{or} \quad S = \frac{S_0}{1-p}$$

Meanwhile, the above-mentioned expressions include unknown coefficients (K, F). These coefficients are known to be constants and thus can be erased easily. It will be sufficient if measurement is per formed with varied wavelengths in order to set up an additional number of equations corresponding to the number of unknown coefficients.

In general, however, there is a high risk of increasing errors if the minimal number of equations are set up while relying on the wavelength dependence alone. This is because errors often exist in various coefficients themselves and accumulate in final results. It is therefore important to carry out measurement in many wavelengths other than those minimally employed, in order to alleviate the errors. In this case, arithmetic operations are performed according to the method of least squares.

When determination equations are nonlinear as in the present invention, least-squares calculations of nonlinear equations are carried out according to Newton's approximation. Here, when arithmetic operations are complicated as in the present invention, calculations in which the least-squares method is applied to individual stages for respective equations mentioned above seem to be easier for determining final p and q.

When calculations are employed in a divided fashion as such, the convergence of errors, which is a characteristic feature of the least-squares method, is divided into the respective stages, whereby there is no guarantee that an optimal value is finally obtained.

In this regard, since all the stages are expressed by analytical expressions though nonlinear, the present invention can analytically express the coefficient matrix of the determinant in each stage and can attain the total solution by simply applying the least-squares method to the final single determinant, while being able to derive coefficient determinants from the individual stages and combine them together, which are excellent features. In the following, an example of solving method will be set forth.

Since Newton's approximation is well known, only its fundamental means will be explained in brief. When (e. g., 16) values measured with respective wavelengths different from each other of deviations from an estimated resolution value taken as a center are referred to as m1, ..., m16, they are represented as in the following equation since T and R are described by p and q. [M] is a Jacobian determinant according to differential classes of the individual coefficients and is a known coefficient.

$$
\begin{bmatrix} \Delta m_1 \\ \vdots \\ \Delta m_{16} \end{bmatrix} = [M] \begin{bmatrix} \Delta a_x \\ \Delta a_y \\ \Delta s_x \\ \Delta s_y \\ \Delta K \\ \Delta F \end{bmatrix}
$$

[M] is diagonalized when necessary.

Subsequently, matrix [A] is determined by the above-mentioned expression (*), whereas a and s are described by p and q, whereby the following equation is obtained similarly:

$$
\begin{bmatrix} \Delta a_x \\ \Delta a_y \\ \Delta s_x \\ \Delta s_y \\ \Delta K \\ \Delta F \end{bmatrix} = [A] \begin{bmatrix} \Delta p_x \\ \Delta q_x \\ \Delta p_y \\ \Delta q_y \\ \Delta K \\ \Delta F \end{bmatrix}
$$

Hence, the solution of the following equation can be obtained:

$$
\begin{bmatrix} \Delta p_x \\ \Delta q_x \\ \Delta p_y \\ \Delta q_y \\ \Delta K \\ \Delta F \end{bmatrix} = [A]^{-1}[M]^{-1} \begin{bmatrix} \Delta m_1 \\ \vdots \\ \Delta m_{16} \end{bmatrix}
$$

In these numeric calculations, accelerated convergence solving techniques can be employed by various known methods. In the case of the above-mentioned example, calculations are possible with any number of wavelengths (e.g., 4096 wavelengths) not smaller than 6, regardless of whether they have a continuous spectrum or discrete wavelength characteristics. If a sufficient number of measurement operations are carried out with respective wavelengths different from each other, final calculation results can be obtained with the least error, which has conventionally been impossible in such a complicated system.

In particular, there has conventionally been no theory which enables numeric calculations by such an analytic technique. It is a new discovery that the interrelationship between nonuniform minute tissues can be expressed and processed by simple coefficients of K and F.

If it is clear that the medium has totally different layer structures in its depth, e.g., where a skin layer, a coating protecting layer, and the like exist, they are preferably divided for respective calculations. The calculations are simple when the partial thickness of each layer is known, but can also attain solutions when the thickness is unknown. Namely, the coefficient matrices explained above can be combined together, so as to be treated as a cascade of two kinds of transfer functions.

It is indicated that calculations should include some undetermined coefficients in the case explained in the foregoing. It is shown that complicated tissue structures in inhomogeneous media and the like can be expressed as a form including unknown coefficients by setting up a number of simultaneous equations and solving them by employing the least-squares method. A characteristic feature of this theory also lies in that solutions can thus be determined while utilizing the fact that unknown coefficients can be erased as implicit functions.

Therefore, metrical solutions can be determined even when a tissue has a nonuniform structure and a complicated, unknown, intricate form or an unknown cross-sectional area.

This immediately guarantees quantitative measurement results of p, q, and the like. For example, though conventional biological optical analyses can easily detect the absorption of oxygenated hemoglobin in the blood, they cannot determine an absolute ingredient amount quantitatively but measure only qualitative behaviors if the effective cross-sectional area ratio of the blood vessel is unknown. By contrast, the method of the present invention makes it possible to erase the effective cross-sectional area and the like and determine the absolute value of a specific ingredient in a specific tissue for the first time.

Thus not only actual objects, organisms, and the like are nonuniform, but also their tissues are complicated and have conventionally been impossible to display and analyze mathematically. The technique of the present invention has found that tissue structure parameters can be approximated as simple implicit functions, and erases them in the process of a numeric analysis, thus exhibiting a characteristic feature of being able to reach solutions without arguing nonuniform contents in detail.

When a substance is a medium having a nonuniform structure or a multiphase or multiphase separation structure as in a mixture, the above-mentionedmethod can be applied thereto, so as to separate individual components in each tissue from each other and calculate them independently from each other. When the inhomogeneous medium is composed of a number of sectional tissues, simultaneous equations including the number of intermediate elements corresponding to the kinds of tissues can be contracted, and thus contracted equations can be applied to the above-mentioned analyzing technique in the case where the number of tissues X, Y is 2.

The analyzing method explained here is quite useful in practice, since target solutions canbe attainedwithout explicitly handling differences in detailed optical characteristics among a plurality of tissues composed of tissues X, Y, etc. In a measurement example in an organism as a specific example, blood vessels and other tissues exist as an inhomogeneous multiphase mixture state in an actual organism. According to the example mentioned above, the X tissue is treated as the blood part in the blood vessels, the Y tissue is treated as the other tissue part, and x and y are calculated as respective quantities of light included therein.

Measurement of concentrations of oxygenated hemoglobin and reduced hemoglobin in the X tissue, measurement of concentrations of protein groups (Cytochrome, aa3, etc.) of electron transport systems in Y tissue cells, etc. become possible.

Such characteristic features make the present invention effectively applicable to media which are mixed nonuniformly with absorption and scattering coexisting, and a wide range of substances conventionally hard to measure, thus yielding great effects. Examples of the substances include industrial products, natural products such as food and plants, other mixtures, polycrystals, and turbid materials.

In brief, the present invention is effective when substances having respective modes different from each other are mixed nonuniformly.

As for foods, while cereals, fruits, oils and fats, etc. are vigorously studied and developed in terms of quantitative measurement of inner substances and the like by utilizing infrared light, analyses are in progress while their samples are considered uniform. However, foods include those which should clearly be treated as nonuniform substances, such as a product in which cut fruits are contained in a yogurt. The method of the present invention works effectively for them.

In the field of color matching of fiber dying (color matching calculations), the method of the present invention is not effective in the field of color matching calculations for a scheme in which fabrics are dyed after being prepared, but in the field of so-called fiber blend color matching calculations in which strings or wool yarns are dyed beforehand and then these strings having respective colors slightly different from each other are mixed or strings having respective colors different from each other are mixed so as to yield a desirable color.

In the field of water, plastics, and other (metal) materials (while assuming visible light to be a common electromagnetic wave instead of medium), a solid, a liquid, or their transient state (solid solution in the case of a metal) exists in their melted stage. The present invention can become means for elucidating details of their mixed state.

Also, the mathematical theory solely extracted from this specification is seen to be effective in the study and elucidation of nonuniform and inhomogeneous systems in future. This is because the science of nonuniform systems has just begun at present, so that substantially no theoretical expression for explaining a nonuniform system exists except for that of the present invention.

For example, when a developing process in which an ovum grows to a human by way of an embryo is optically studied, nonuniformity increases.

The present invention can become one of mathematical theories which gives a hint to a grand problem of why an organism makes a nonuniform system and complex system so skillfully and perfectly, and an experimental system therefor in future.

However, it is necessary that (i) a numerical database of absorption and scattering coefficients be known and that (ii) the convenience of numerical processing be studied since the method is based on a generic solution, whereby the amount of calculations can increase. These may vary depending on objects, whereby it is necessary to find appropriate simplifying means empirically for specific cases.

While it is stated that the parameters of the tissues can be approximated as simple implicit functions and erased in the process of numerical analysis, it is one of points in practice how calculations are carried out without letting out the tissue parameters. The above-mentioned arithmetic operations are performed by a computer as an arithmetic unit.

The expression on which the above-mentioned general expressions are based is an expression of Amy (L. Amy, Rev. d'optique 16 81 (1938)). The general expressions of the present invention are based on Amy's expression (uniform composition expression for a single composition) and developed into a nonuniform state, i.e., giving and taking of photons between different channels are added thereto. Thus designed expressions can be used as general expressions for quantitatively analyzing substances in mixtures, polycrystals, turbid materials, and other nonuniform states.

As explained in the foregoing, the method of optically analyzing an inhomogeneous medium in accordance with the above-mentioned embodiment determines a physical quantity of a light-absorbing and light-scattering inhomogeneous medium including a plurality of tissues X, Y having respective optical characteristics different from each other from the intensity of light transmitted therethrough or reflected thereby. A procedure executed by a computer comprises the following steps:

(i) Light having a known intensity $I_0$ at a known wavelength is made incident on the medium from a light source.
(ii) The optical intensity $I_{(R)}$ upon reflection or optical intensity $I_{(T)}$ upon transmission emitted from the medium is measured by a photodetector.
(iii) The above-mentioned steps (i) and (ii) are executed at a plurality of wavelengths, and the optical intensity $I_{(R)}$ or $I_{(T)}$ as a measured result is recorded into a storage device of the computer.
(iv) Using a known physical quantity (PV) and the optical intensity $I_{(R)}$ or $I_{(T)}$ recorded in the storage device, a target physical quantity is calculated by an arithmetic operation of the computer. The tissues are composed of two phases of X and Y, whereas the target physical quantity is set to a physical quantity other than the known physical quantity (PV) in the database.

Namely, the target physical quantity is determined by inputting those known in the following coefficients as known physical quantities stored in the database and the measured optical intensity $I_{(R)}$ or $I_{(T)}$ into those related to the arithmetic operation in the following expressions:

(1) detected value $I_{(R)}$ or $I_{(T)}$
(2) physical quantities in the database

T: transmittance of the medium
R: reflectance of the medium
h: thickness of the medium
$a_x$: absorption coefficient of tissue X
$s_x$: scattering coefficient of tissue X

$a_y$: absorption coefficient of tissue Y
$s_y$: scattering coefficient of tissue Y
$\rho_x$: parameter defined for tissue X in conformity to a uniform system
$\rho_y$: parameter defined for tissue Y in conformity to a uniform system
$\sigma_x$: parameter defined for tissue X in conformity to a uniform system
$\sigma_y$: parameter defined for tissue Y in conformity to a uniform system
K: cross-sectional area ratio of tissues X and Y
F: light quantity redistribution coefficient of mutual scattering between tissues X and Y
$\lambda_x$, $\lambda_y$: two solutions of $\lambda$ equation.

Here, each of ($a_x$, $s_x$) and ($a_y$, $s_y$) has conventionally been written as ($\mu_a$, $\mu_s'$) in academic literatures.

(3) Expressions

reflected light intensity $I_{(R)} = I_0 \times R$
transmitted light intensity $I_{(T)} = I_0 \times T$

$$R = \frac{K|1\text{-}\sigma_x| + |1\text{-}\sigma_y|}{K|1\text{+}\sigma_x| + |1\text{+}\sigma_y|}$$

$$T = 4\frac{K\frac{\sigma_x}{1+\sigma_x}\exp|\text{-}\lambda_x h| + \frac{\sigma_y}{1+\sigma_y}\exp|\text{-}\lambda_x h|}{K|1\text{+}\sigma_x| + |1\text{+}\sigma_y|}$$

$$\sigma_x = \frac{\lambda_x}{a_x + 2s_x}$$

$$\sigma_y = \frac{\lambda_y}{a_y + 2s_y}$$

$$\lambda = \sqrt{\frac{1-F}{2}\left[(1-F)\left(\rho_x^2 + \rho_y^2\right) \pm \sqrt{(1-F)^2\left(\rho_x^2 - \rho_y^2\right)^2 + 4F^2 s_x s_y \left(a_x + 2s_x\right)\left(a_y + 2s_y\right)}\right]}$$

$$\rho_x = \sqrt{a_x|a_x + 2s_x|}$$

$$\rho_y = \sqrt{a_y|a_y + 2s_y|}$$

The mutual redistribution coefficient F is determined by fine structures of tissues and mostly is a constant. Namely, F in the above-mentioned expression is used when the average radius of curvature of the tissue interface is smaller than the photon mean free path, whereas another constant $F_2$ is simply used in place of $F_2 s_x s_y$ in the expression when the average radius of curvature is greater than the photon mean free path.
Using relationships in which the physical quantities $a_x$, $s_x$, $a_y$, and $s_y$ are proportional to the concentration of a predetermined target ingredient in the medium, the concentration of the predetermined ingredient can be calculated.
When a nonproportional relationship due to multiple scattering or the like exists between the concentration of each ingredient and its absorption or scattering light quantity instead of a usual proportional relationship, solutions can be determined by employing their relational equation which is not linearly proportional.
The optical analysis method of the present invention can accurately analyze inhomogeneous media.

**Industrial Applicability**

The present invention can be utilized in a method of optically analyzing inhomogeneous media.

**Claims**

1. A method of optically analyzing an inhomogeneous medium for determining a physical quantity of a light-absorbing and light-scattering inhomogeneous medium including a plurality of tissues having respective optical characteristics different from each other from light transmitted therethrough or reflected thereby, assuming T to be the transmittance of the medium having a thickness h, and R be the reflectance of the medium, the method comprising:

a first step of making light having a known intensity $I_0$ at a known wavelength incident on the medium;
a second step of measuring an optical intensity $I_{(R)}$ upon reflection or optical intensity $I_{(T)}$ upon transmission emitted from the medium;
a third step of executing the first and second steps at a plurality of wavelengths and recording the optical intensity $I_{(R)}$ or $I_{(T)}$ as a measurement result; and
a fourth step of calculating a target physical quantity by an algebraic operation including a least-squares method or the like while utilizing a known physical quantity stored in a database and the optical intensity $I_{(R)}$ or $I_{(T)}$;

wherein, when the plurality of tissues are composed of two phases of x and y, the operation of the fourth step is carried out such that the target physical quantity is determined by inputting those known in the following coefficients as known physical quantities stored in the database and the measured optical intensity $I_{(R)}$ or optical intensity $I_{(T)}$ into those related to arithmetic operations in the following expressions:

reflected light intensity $I_{(R)} = I_0 \times R$
transmitted light intensity $I_{(T)} = I_0 \times T$

$$R = \frac{K|1-\sigma_x| + |1-\sigma_y|}{K|1+\sigma_x| + |1+\sigma_y|}$$

$$T = 4\frac{K\frac{\sigma_x}{1+\sigma_x}\exp|-\lambda_x h| + \frac{\sigma_y}{1+\sigma_y}\exp|-\lambda_x h|}{K|1+\sigma_x| + |1+\sigma_y|}$$

$$\sigma_x = \frac{\lambda_x}{a_x + 2s_x}$$

$$\sigma_y = \frac{\lambda_y}{a_y + 2s_y}$$

$$\lambda = \sqrt{\frac{1-F}{2}\left[(1-F)(\rho_x^2 + \rho_y^2) \pm \sqrt{(1-F)^2(\rho_x^2 - \rho_y^2)^2 + 4F^2 s_x s_y (a_x + 2s_x)(a_y + 2s_y)}\right]}$$

$$\rho_x = \sqrt{a_x|a_x + 2s_x|}$$

$$\rho_y = \sqrt{a_y|a_y + 2s_y|}$$

where $\lambda_x$ and $\lambda_y$ are two solutions of $\lambda$ equation, whereas the coefficients are parameters indicating characteristic features of a nonuniform system and having the following meanings:

$\rho_x$, $\rho_y$, $\sigma_x$, and $\sigma_y$ are parameters defined for respective parts of x and y in conformity to a uniform system; an undetermined coefficient F defining mutual scattering between x and y is used in addition and, by way of the parameters, nonuniform characteristic parameters $\lambda_x$, $\lambda_y$, $\sigma_x$, and $\sigma_y$ directly ruling a light quantity display in a nonuniform system are defined; and
the coefficients included in $\lambda$, $\rho$, and $\sigma$ are as follows:

$a_x$: absorption coefficient of tissue X
$s_x$: scattering coefficient of tissue X
$a_y$: absorption coefficient of tissue Y
$s_y$: scattering coefficient of tissue Y
K: cross-sectional area ratio of tissues X and Y
F: light quantity redistribution coefficient of mutual scattering between tissues X and Y;

wherein each of ($a_x$, $s_x$) and ($a_y$, $s_y$) has conventionally been written as ($\mu_a$, $\mu_s'$) in an academic literature.

2. A method of optically analyzing an inhomogeneous medium according to claim 1, wherein the mutual redistribution coefficient F is determinedby fine structures of tissues andmostly is a constant, i.e., F in the expression is used when the average radius of curvature of the tissue interface is smaller than the photon mean free path, whereas another constant $F_2$ is used in place of $F_2 s_x s_y$ in the expression when the average radius of curvature is greater than the photon mean free path.

3. A method of optically analyzing an inhomogeneous medium according to claim 1, wherein, by using a relationship in which the physical quantities $a_x$, $s_x$, $a_y$, and $s_y$ are proportional to the concentration of a predetermined target ingredient in the medium, the concentration of the predetermined ingredient is calculated.

4. A method of optically analyzing an inhomogeneous medium according to claim 1, wherein, when a nonproportional relationship due to multiple scattering or the like exists between the concentration of each ingredient and an absorption or scattering light quantity thereof instead of a usual proportional relationship, a solution is determined by employing a relational equation therebetween which is not linearly proportional.

**INTERNATIONAL SEARCH REPORT**

| International application No. |
| --- |
| PCT/JP02/13716 |

A. CLASSIFICATION OF SUBJECT MATTER
    Int.Cl⁷  G01N21/27

According to International Patent Classification (IPC) or to both national classification and IPC

B. FIELDS SEARCHED

Minimum documentation searched (classification system followed by classification symbols)
    Int.Cl⁷  G01N21/00-21/01, 21/17-21/61, A61B10/00

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
    JOIS, WPI/L, PATOLIS

C. DOCUMENTS CONSIDERED TO BE RELEVANT

| Category* | Citation of document, with indication, where appropriate, of the relevant passages | Relevant to claim No. |
| --- | --- | --- |
| A | WO 00/65330 A  (Hamamatsu Photonics Kabushiki Kaisha), 02 November, 2000 (02.11.00), Full text & EP 1182444 A          & US 2002/0082504 A | 1-4 |
| A | JP 2001-264245 A  (Hamamatsu Photonics Kabushiki Kaisha), 26 September, 2000 (26.09.00), Full text (Family: none) | 1-4 |
| A | OPTICS LETTERS, Vol.20, No.20, 1995, pages 2128 to 2130 | 1-4 |

☐ Further documents are listed in the continuation of Box C.      ☐ See patent family annex.

| | |
| --- | --- |
| *    Special categories of cited documents: "A"  document defining the general state of the art which is not considered to be of particular relevance "E"  earlier document but published on or after the international filing date "L"  document which may throw doubts on priority claim(s) or which is cited to establish the publication date of another citation or other special reason (as specified) "O"  document referring to an oral disclosure, use, exhibition or other means "P"  document published prior to the international filing date but later than the priority date claimed | "T"  later document published after the international filing date or priority date and not in conflict with the application but cited to understand the principle or theory underlying the invention "X"  document of particular relevance; the claimed invention cannot be considered novel or cannot be considered to involve an inventive step when the document is taken alone "Y"  document of particular relevance; the claimed invention cannot be considered to involve an inventive step when the document is combined with one or more other such documents, such combination being obvious to a person skilled in the art "&"  document member of the same patent family |

| | |
| --- | --- |
| Date of the actual completion of the international search     04 April, 2003 (04.04.03) | Date of mailing of the international search report     22 April, 2003 (22.04.03) |
| Name and mailing address of the ISA/     Japanese Patent Office | Authorized officer |
| Facsimile No. | Telephone No. |

Form PCT/ISA/210 (second sheet) (July 1998)

13